# EUROPEAN PATENT APPLICATION

(11) **EP 2 250 904 A1**
(43) Date of publication of application: **17.11.2010**
(21) Application number: 10004992.3
(22) Date of filing: 12.05.2010
(51) Int. Cl.: A01N 65/00, A01P 17/00, A01N 25/02

(54) **Liquid valuable wood oil-based mothproofing composition**

(30) Priority: 14.05.2009 CH 7562009
(71) Applicant: TAVOLA S.p.A., 20141 Milano (IT)
(72) Inventor: Bachmann, Silvia, 6925 Collina d'Oro (CH)
(74) Representative: La Ciura, Salvatore

(57) **Abstract**

A liquid room deodorizing composition having a mothproofing effect, characterized in that it is based on natural scented oils and valuable wood oils.

## Description

The present invention relates to a liquid composition which is **characterized in that** it is solely composed of scented substances, most of which are valuable wood oils, whose combination also has a powerful mothproofing effect.

The composition of the invention finds application in the field of products having a moth repellent effect, i.e. those products that release for a given time moth repelling vapors, because of their highly irritating effect for these insects,.

Prior art mothproofing compositions release vapors that may be generated by either evaporation or sublimation of substances that are part of the composition, which may be of either natural or synthetic nature.

If these products are synthetic, the vapors they release usually has a toxic effect on moths, which generally die in an atmosphere saturated with these vapors, for example in a wardrobe.

Nonetheless this effect also occurs, although to a much lower extent, in people that inhale these vapors and may induce allergic reactions in particularly sensitive individuals.

Are also known composition which are based on natural products, such as citronella, lavender, or clove oils, which are used either alone or in combinations.

These compositions have not been particularly appreciated by the public, due to their mild and short-lasting effect, and to the consequent need of using the product in high concentrations or frequently replacing it, which is not a cost effective feature.

The present invention finds application in this field, and provides a mothproofing composition based on natural substances, which composition has a strong moth repelling effect in spite of its pleasant scent.

The composition of the invention, as mentioned above, is composed of scented substances only, particularly, substances occurring in nature, and in which most of the components are valuable wood essential oils.

Using these components, the present inventor developed a composition that is more effective than most of prior art products, ensures a good deodorizing effect and acts as a powerful mothproofer.

The compound of the present invention has the following compositions, with the parts being expressed by weight:

| | |
|---|---|
| Cedrenyl acetate | 0.1 to 2 parts per thousand |
| Eugenyl acetate | 0.1 to 3 parts per thousand |
| Acetophenone | 0.001 to 1 parts per thousand |
| Anisic aldehyde | 0.1 to 3 parts per thousand |
| Methyl cynnamic aldehyde | 0.1 to 3 parts per thousand |
| Benzyl benzoate | 0.1 to 50 parts per thousand |
| Cedryl methyl ether | 0.1 to 20 parts per thousand |
| Atlas cedarwood essential oil | 0.01 to 5 parts per thousand |
| Cedrol | 0.1 to 5 parts per thousand |
| Cis-3-Hexenol | 0.0001 to 1 parts per thousand |
| Triethyl citrate | 0.1 to 1 parts per thousand |
| Citronellol | 0.001 to 1 parts per thousand |
| Coriander oil | 0.1 to 2 parts per thousand |
| Coumarin | 0.1 to 3 parts per thousand |
| Delta-damascone | 0.01 to 1 parts per thousand |
| Methyl dehydro jasmonate | 0.01 to 1 parts per thousand |
| Dihydromircenol | 1 to 40 parts per thousand |
| Dipropylene glycol | 0.1 to 10 parts per thousand |
| 1-(5,5-dimethyl-cyclohexane-1-yl)pent-4-en-1-one | 0.0001 to 1 parts per thousand |
| 3-methyl-5-(2,2,3-trimethyl-3-cyclopentane-1-yl)-4-penten-2-ol | 0.1 to 2 parts per thousand |
| Eugenol | 0.1 to 3 parts per thousand |
| Iso-longipholanone | 0.1 to 3 parts per thousand |
| Lavendin essential oil | 0.1 to 5 parts per thousand |
| Methyl atrarate | 0.0001 to 1 parts per thousand |
| Nutmeg oil | 0.01 to 1 parts per thousand |
| 2-methyl-4-propyl-1,3-oxathiane(z) | 0.001 to 1 parts per thousand |
| Oxide rose L | 0.0001 to 1 parts per thousand |
| Para-mentha-8-thiol-3-one | 0.00001 to 0.1 parts per thousand |
| Patchouli essential oil | 0.1 to 25 parts per thousand |
| Alpha-pinene | 0.0001 to 1 parts per thousand |
| Beta-pinene | 0.01 to 1 parts per thousand |
| Ethyl vanillin | 0.01 to 1 parts per thousand |
| 3,4,4a,5,8,8°-hydrohexa-3',7'-dimethylspiro(1,4-methano phthalene-2(1h)2'6 | |
| oxirane) | 0.005 to 0.1 parts per thousand |
| Dimethyl cyclo hex-3-ene- 1-carboxaldehyde | 0.001 to 0.1 parts per thousand |
| 2,2,5-trimethyl-5-pentyl-cyclopentanone | 0.001 to 0.1 parts per thousand |
| Maltol | 0.01 to 1 parts per thousand |

Among the mixtures that have been tested by the Applicant, the one that yielded the best results was as follows:

| | |
|---|---|
| • Cedrenyl acetate | 1 |
| • Eugenyl acetate | 1.4 |
| • Acetophenone | 0.06 |
| • Anisic aldehyde | 1.2 |
| • Methyl cynnamic aldehyde | 1.6 |
| • Benzyl benzoate | 30.2 |
| • Cedryl Methyl Ether | 11 |
| • Atlas cedarwood oil | 0.5 |
| • Cedrol | 2.5 |
| • Cis-3-Hexenol | 0.0003 |
| • Triethyl citrate | 0.24 |
| • Citronellol | 0.03 |
| • Coriander oil | 0.8 |
| • Coumarin | 1.6 |
| • Delta-damascone | 0.2 |
| • Methyl dehydro jasmonate | 0.14 |
| • Dihydromircenol | 20 |
| • Dipropylene glycol | 6.957 |
| • 1-(5.5-dimethyl-cyclohexane-1-yl)pent-4-en-1-one | 0.0015 |
| • 3-methyl-5-(2.2.3-trimethyl-3-cyclopentane-1-yl)-4-penten-2-ol | 0.6 |
| • Eugenol | 1.5 |
| • Iso-longipholanone | 1.4 |
| • Lavendin essential oil | 2 |
| • Methyl atrarate | 0.003 |
| • Nutmeg oil | 0.1 |
| • 2-methyl-4-propyl-1.3-oxathiane(z) | 0.012 |
| • Oxide rose L 0.0015 | |
| • Para-mentha-8-thiol-3-one | 0.0001 |
| • Patchouli essential oil | 14 |
| • Alpha-pinene | 0.005 |
| • Beta-pinene | 0.1 |
| • Ethyl vanillin | 0.6 |
| • 3.4.4a.5.8.8°-hydrohexa-3'.7'-dimethylspiro(1.4-methano phthalene- 2(1h)2'6 oxirane) | 0.015 |
| • Dimethyl cyclo hex-3-ene-1-carboxaldehyde | 0.013 |
| • 2.2.5-trimethyl-5-pentyl-cyclopentanone | 0.015 |
| • Maltol | 0.2066 |

According to a preferred embodiment, absorbent paper is used as a substrate for the composition, which is produced in the liquid state, which substrate being impregnated with the composition.

Nevertheless, other types of substrates may be used, as long as they have adequate porosity and formability, to obtain the most appropriate shapes for each application.

The substances included in the composition have been listed with the trade name with which they are known, not only by their manufacturers but also by those skilled in the art.

The skilled persons may also envisage changes and variants to the above, which shall be intended to be included in the scope of the invention.

## Claims

1. A liquid room deodorizing composition having a moth-proofing effect, **characterized in that** it is based on natural scented oils, in this case valuable wood oils.

2. A moth-proofing composition as for claim 1, **characterized in that** it includes the following formulation, with parts expressed by weight
| | |
|---|---|
| Cedrenyl acetate | 0.1 to 2 parts per thousand |
| Eugenyl acetate | 0.1 to 3 parts per thousand |
| Acetophenone | 0.001 to 1 parts per thousand |
| Anisic aldehyde | 0.1 to 3 parts per thousand |
| Methyl cynnamic aldehyde | 0.1 to 3 parts per thousand |
| Benzyl benzoate | 0.1 to 50 parts per thousand |
| Cedryl Methyl Ether | 0.1 to 20 parts per thousand |
| Atlas cedarwood oil | 0.01 to 5 parts per thousand |
| Cedrol | 0.1 to 5 parts per thousand |
| Cis-3-Hexenol | 0.0001 to 1 parts per thousand |
| Triethyl citrate | 0.1 to 1 parts per thousand |
| Citronellol | 0.001 to 1 parts per thousand |
| Coriander oil | 0.1 to 2 parts per thousand |
| Coumarin | 0.1 to 3 parts per thousand |
| Delta-damascone | 0.01 to 1 parts per thousand |
| Methyl dehydro jasmonate | 0.01 to 1 parts per thousand |
| Dihydromircenol | 1 to 40 parts per thousand |
| Dipropylene glycol | 0.1 to 10 parts per thousand |
| 1-(5,5-dimethyl-cyclohexane-1-yl)pent-4-en-1-one | 0.0001 to 1 parts per thousand |
| 3-methyl-5-(2,2,3-trimethyl-3-cyclopentane-1-yl)-4-penten-2-ol | 0.1 to 2 parts per thousand |
| Eugenol | 0.1 to 3 parts per thousand |
| Iso-longipholanone | 0.1 to 3 parts per thousand |
| Lavendin essential oil | 0.1 to 5 parts per thousand |
| Methyl atrarate | 0.0001 to 1 parts per thousand |
| Nutmeg oil | 0.01 to 1 parts per thousand |
| 2-methyl-4-propyl-1,3-oxathiane(z) | 0.001 to 1 parts per thousand |
| Oxide rose L | 0.0001 to 1 parts per thousand |
| Para-mentha-8-thiol-3-one | 0.00001 to 0.1 parts per thousand |
| Patchouli essential oil | 0.1 to 25 parts per thousand |
| Alpha-pinene | 0.0001 to 1 parts per thousand |
| Beta-pinene | 0.01 to 1 parts per thousand |
| Ethyl vanillin | 0.01 to 1 parts per thousand |
| 3,4,4a,5,8,8°-hydrohexa-3',7'-dimethylspiro(1,4-methano phthalene-2(1h)2'6 oxirane) | 0.005 to 0.1 parts per thousand |
| Dimethyl cyclo hex-3-ene- 1-carboxaldehyde | 0.001 to 0.1 parts per thousand |
| 2,2,5-trimethyl-5-pentyl-cyclopentanone | 0.001 to 0.1 parts per thousand |
| Maltol | 0.01 to 1 parts per thousand |

3. A mothproofing composition as claimed in claim 2, **characterized in that** it has the following formulation:
| | |
|---|---|
| Cedrenyl acetate | 1 |
| Eugenyl acetate | 1,4 |
| Acetophenone | 0,06 |
| Anisic aldehyde | 1,2 |
| Methyl cynnamic aldehyde | 1,6 |
| Benzyl benzoate | 30,2 |
| Cedryl Methyl Ether | 11 |
| Atlas cedarwood oil | 0,5 |
| Cedrol | 2,5 |
| Cis-3-Hexenol | 0,0003 |
| Triethyl citrate | 0,24 |
| Citronellol | 0,03 |
| Coriander oil | 0,8 |
| Coumarin | 1,6 |
| Delta-damascone | 0,2 |
| Methyl dehydro jasmonate | 0,14 |
| Dihydromircenol | 20 |
| Dipropylene glycol | 6,957 |
| 1-(5,5-dimethyl-cyclohexane-1-yl)pent-4-en-1-one | 0,0015 |
| 3-methyl-5-(2,2,3-trimethyl-3-cyclopentane-1-yl)-4-penten-2-ol | 0.6 |
| Eugenol | 1,5 |
| Iso-longipholanone | 1,4 |
| Lavendin essential oil | 2 |
| Methyl atrarate | 0,003 |
| Nutmeg oil | 0,1 |
| 2-methyl-4-propyl-1,3-oxathiane(z) | 0,012 |
| Oxide rose L | 0,0015 |
| Para-mentha-8-thiol-3-one | 0,0001 |
| Patchouli essential oil | 14 |
| Alpha-pinene | 0,005 |
| Beta-pinene | 0,1 |
| Ethyl vanillin | 0,6 |
| 3,4,4a,5,8,8°-hydrohoxa-3',7'-dimethylspiro(1,4-methano phthalene-2(1h)2'6 oxirane) | 0,015 |
| Dimethyl cyclo hex-3-ene-1-carboxaldehyde | 0,013 |
| 2,2,5-trimethyl-5-pentyl-cyclopentanone | 0,015 |
| Maltol | 0,2066 |

4. Moth-proofing strips formed by impregnating a porous substrate with a composition as claimed in claims 1 to 3.

5. Moth-proofing strips as claimed in claim 4, wherein said porous substrate is formed of absorbent paper.
